# EUROPÄISCHE PATENTSCHRIFT

(11) **EP 3 056 293 B1**
(45) Veröffentlichungstag und Bekanntmachung des Hinweises auf die Patenterteilung: **29.03.2017**
(21) Anmeldenummer: 16000470.1
(22) Anmeldetag: 29.11.2013
(51) Int. Cl.: B21D 43/24, B65H 3/08, B65H 1/24, B65H 1/06, B21D 43/22, B65H 1/30, B65H 3/48

(54) **ABSTAPELVORRICHTUNG UND VERFAHREN ZUM ABSTAPELN VON METALLBLECHEN**
UNSTACKING DEVICE AND METHOD FOR UNSTACKING PILES OF METAL SHEETS
DISPOSITIF DE DÉSEMPILAGE ET PROCÉDÉ DE DÉSEMPILAGE DE TÔLES MÉTALLIQUES

(30) Priorität: 17.12.2012 CH 28362012
(43) Veröffentlichungstag der Anmeldung: 17.08.2016
(62) Teilanmeldung aus: 13805732.8
(73) Patentinhaber: Soudronic AG, 8962 Bergdietikon (CH)
(72) Erfinder: Taiana, Peter, 8967 Widen (CH)
(74) Vertreter: Naiu, Radu Mircea

(56) Entgegenhaltungen:
- EP-A1- 0 574 745
- EP-A1- 1 914 169
- WO-A1-2012/119915
- DE-A1- 10 154 235
- DE-A1-102005 008 418
- US-A- 3 353 822

## Beschreibung

### Gebiet der Erfindung

Die Erfindung betrifft eine Abstapelvorrichtung umfassend ein unterseitig offenes Stapelmagazin und eine unterhalb des Stapelmagazins angeordnete Abzugseinrichtung mit einem angetrieben aufwärts und abwärts bewegbaren Saugelement, welches in seiner Umkehrlage von der Aufwärtsbewegung zur Abwärtsbewegung innerhalb der unteren Öffnung des Stapelmagazins positioniert ist, zum Erfassen des jeweils untersten Blechs mittels Unterdruck und Abziehen des erfassten Blechs vom Stapel gemäß dem Oberbegriff des Anspruchs 1 (siehe z.B. DE-A1-101 54 235). Ferner betrifft die Erfindung ein Verfahren zum Abstapeln einzelner Bleche von der Unterseite eines Blechstapels gemäss dem Oberbegriff des Anspruchs 5. Ferner betrifft die Erfindung eine Anordnung aus einer Abstapelvorrichtung gemäß der Erfindung einem Rundapparat und einer Schweissmaschine sowie ein Verfahren zur Herstellung von Dosenzargen, welches das Verfahren gemäß der Erfindung verwendet.

### Hintergrund

Die Erfindung liegt auf dem Gebiet der Herstellung von Behälterzargen und insbesondere Dosenzargen aus Stahlblech. Bei deren Herstellung werden einzelne Bleche von einem Stapel abgestapelt und einem Rundapparat und nachfolgend einer Schweissmaschine zur Schweissung der Längsnaht des Behälters bzw. der Dose zugeführt. Dies ist dem Fachmann bekannt. Der von den aufeinanderliegenden Einzelblechen gebildete Stapel, der z.B. ungefähr 200 bis 1000 Bleche umfasst, befindet sich in einem Stapelmagazin und liegt dort auf seitlich angebrachten Auflageschienen und Auflagerasten auf, so dass das Gewicht des Stapels auf das unterste Blech wirkt. Nach Stand der Technik wird das unterste Blech von einem sich angetrieben auf- und ab bewegenden Saugerkopf mit mehreren Saugern in der oberen Stellung des Saugerkopfs kontaktiert und mittels Unterdruck angesaugt. Bei der Abwärtsbewegung des Saugerkopfs wird das angesaugte Blech aus den Auflageschienen und Auflagerasten nach unten weggezogen. Beim Wegziehen muss Luft zwischen dem zu entnehmenden untersten Blech und dem restlichen Blechstapel nachströmen, um den beim Wegziehen entstehenden Unterdruck zwischen dem untersten und dem zweituntersten Blech auszugleichen. Ansonsten werden mehrere Bleche gleichzeitig abgestapelt, was zu unterwünschten Störungen und zu Produktionsausfällen und Materialverlusten führt. Um das Trennen des untersten Blechs vom Rest des Blechstapels zu unterstützen, wird Trennluft über seitlich im Stapelmagazin angebrachte Luftdüsen eingeblasen. Durch den dadurch gebildeten Luftfilm zwischen den untersten paar Blechen wird das Nachströmen der Raumluft gewährleistet und das unterste Blech bei der Entnahme vom zweituntersten Blech getrennt. Sollen hohe Produktionsgeschwindigkeiten erzielt werden, so ist die Trennluft beim Abstapeln unerlässlich. Unter hoher Produktionsgeschwindigkeit wird ein Bereich von 200 Blechen pro Minute bis 1200 Blechen pro Minute verstanden. Typischerweise wird mit 600 Blechen pro Minute gearbeitet.

Es zeigt sich, dass bei Dünnblechen (worunter Bleche mit einer Dicke von geringer als 0.14 mm verstanden werden können) und insbesondere bei quadratischen Blechformaten, bei denen der Weg für das Nachströmen der Luft von allen Seiten lang ist, das Abstapeln auf die genannte herkömmliche Weise problematisch wird. Die Trennluft ist für Dünnbleche schlecht geeignet, da diese Bleche zu wenig stabil sind und auf Grund der Anwendung der Trennluft aus dem Stapelmagazin nach unten herausfallen können.

### Darstellung der Erfindung

Der Erfindung liegt die Aufgabe zu Grunde, eine Abstapelvorrichtung zu schaffen, die die genannten Nachteile nicht aufweist. Diese Abstapelvorrichtung soll somit besonders für Dünnbleche und insbesondere für quadratische oder annähernd quadratische Dünnbleche geeignet sein. Insbesondere soll die Abstapelvorrichtung das Abstapeln von Dünnblechen (Bleche mit einer Dicke geringer als 0.14 mm) und mit hoher Kadenz (mehr als 200 Bleche pro Minute) ermöglichen.

Die Aufgabe wird bei einer Abstapelvorrichtung nach dem Oberbegriff des Anspruchs 1 dadurch gelöst, dass die Haltemittel Magnete umfassen, die an mindestens zwei gegenüberliegenden Seiten des Stapelmagazins angeordnet sind.

Die seitlichen magnetischen Haltemittel halten einen Blechstapel und erleichtern das Abstapeln dünner Bleche. Da an den Seiten des Stapelmagazins, an denen die seitlichen magnetischen Haltemittel vorgesehen sind, keine mechanischen Haltemittel an der Unterseite des Stapels angreifen müssen, wird das Abziehen durch das Saugelement erleichtert und es kann auf Trennluft verzichtet werden. Damit können auch Dünnbleche mit hoher Kadenz und ohne Störungen abgestapelt werden. Die magnetischen Haltemittel halten den Stapel mindestens teilweise entlang seiner Höhe und entlasten daher das unterste Blech vom Gewicht des Stapels, was die Abstapelung des untersten Blechs erleichtert. Die magnetischen Haltemittel können mit einer Abstapelung durch ein Saugelement nach Stand der Technik kombiniert werden. Bevorzugt ist deren Kombination mit einer Abzugseinrichtung mit einem weiteren, vorlaufenden Saugelement gemäss den Ansprüchen 1 bis 4.

Bevorzugt sind bei der Abstapelvorrichtung magnetische Haltemittel an allen vier Seiten der Aufnahme angeordnet. In der bevorzugten Ausführung sind die Haltemittel ausschliesslich magnetische Haltemittel, so dass der Stapel rein magnetisch in der Aufnahme haltbar ist. Damit wird auf mechanische Haltemittel in der Form der herkömmlichen Auflageschienen und Auflagerasten gänzlich verzichtet. Dies erleichtert das Abstapeln von Dünnblechen und verhindert Beschädigungen der Bleche, die auftreten können, wenn die Bleche beim Abstapeln die herkömmlichen Auflagerasten überspringen müssen.

Bevorzugt ist es weiter, dass die magnetischen Haltemittel von stabförmigen, mit ihrer Längsachse vertikal angeordneten Permanentmagneten gebildet sind, wobei die Permanentmagnete vorzugsweise über die ganze Höhe der Aufnahme angeordnet sind und somit den Stapel über seine ganze anfängliche Höhe halten.

Die Aufgabe wird weiter mittels des Verfahrens nach Anspruch 5 gelöst.

Bei einer Anordnung aus Abstapelvorrichtung und Rundapparat und Schweissmaschine ergeben sich die genannten Vorteile bei der Dosenherstellung.

### Kurze Beschreibung der Zeichnungen

Weitere Ausgestaltungen, Vorteile und Anwendungen der Vorrichtungen und der Verfahren ergeben sich aus den abhängigen Ansprüchen und aus der folgenden Beschreibung von Ausführungsbeispielen anhand der Figuren. Dabei zeigen:
Figur 1 eine Abstapelvorrichtung nach Stand der Technik in einer schematischen Vertikalschnittansicht;
Figur 2 eine Abstapelvorrichtung gemäss einem Ausführungsbeispiel der Erfindung in derselben Ansicht wie Figur 1;
Figur 3 den Antrieb von zwei phasenverschoben laufenden Saugelementen mittels eines gemeinsamen Antriebsmotors;
Figur 4 eine schaubildliche Ansicht eines Stapelmagazins mit einer Nachfüllvorrichtung;
Figur 5 eine Detailansicht der Nachfüllvorrichtung; und
Figur 6 eine Draufsicht von oben auf die Öffnung des Stapelmagazins bzw. auf die Aufnahme für den Blechstapel.

### Wege zur Ausführung der Erfindung

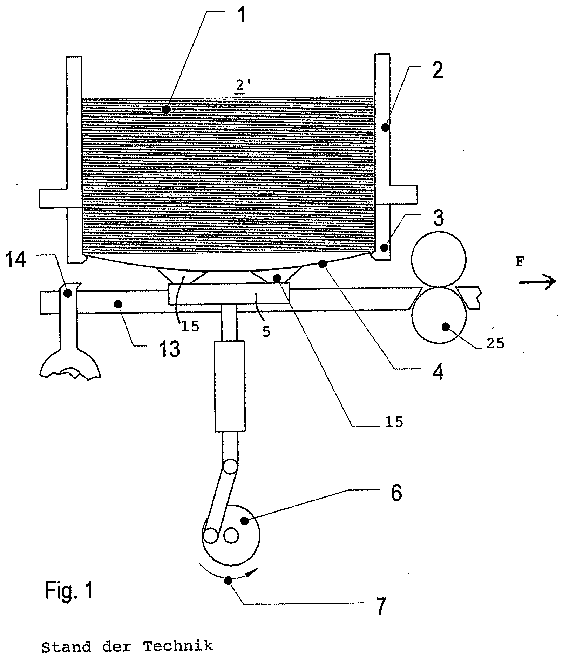

Figur 1 zeigt in einer schematischen Ansicht einen vertikalen Schnitt durch eine Abstapelvorrichtung nach Stand der Technik. Der von den aufeinanderliegenden Einzelblechen gebildete Stapel 1 befindet sich in einem an seiner Unterseite offenen Stapelmagazin 2, das mit seinen Begrenzungen einen Hohlraum bzw. eine Aufnahme 2' für den Blechstapel 1 bildet. Der Blechstapel 1 liegt am unteren Ende der Aufnahme 2' an der unteren Öffnung des Stapelmagazins auf seitlichen Auflageschienen 3 auf. An den anderen beiden Seiten der Aufnahme können ebenfalls Auflageschienen oder sogenannte Auflagerasten vorgesehen sein, was dem Fachmann bekannt ist. Das unterste Blech 4 wird von einem angetrieben aufwärts nach oben und abwärts nach unten bewegten Saugerkopf 5 bzw. Saugelement 5 mit mehreren Saugern in der obersten Stellung des Saugerkopfs kontaktiert und mittels Unterdruck angesaugt. Der Saugkopf ist dazu mit einer Unterdruckquelle verbunden und der Unterdruck bei den Saugnäpfen kann durch mindestens ein gesteuertes Ventil 16 aktiviert werden (Ansaugen des Blechs) und deaktiviert werden (Loslassen des Blechs). Der Antrieb ist mit dem motorisch angetriebenen Rad 6 schematisch gezeigt, an welchem ein Hebel exzentrisch angeordnet ist, der mit einer geführten Tragstange des Saugerkopfes verbunden ist. Die Drehrichtung des Rades 6 ist mit dem Pfeil 7 angegeben. Bei der Abwärtsbewegung des Saugerkopfs - die in der Figur 1 dargestellt ist - wird das angesaugte Blech 4 aus den Auflageschienen und Auflagerasten nach unten weggezogen. Beim Wegziehen muss Luft zwischen dem zu entnehmenden untersten Blech und dem restlichen Blechstapel nachströmen, um den beim Wegziehen entstehenden Unterdruck zwischen dem untersten und dem zweituntersten Blech auszugleichen. Ansonsten werden mehrere Bleche gleichzeitig abgestapelt, was zu unterwünschten Störungen und zu Produktionsausfällen und Materialverlusten führt. Um das Trennen des untersten Blechs vom Rest des Blechstapels zu unterstützen, wird Trennluft über nicht dargestellte seitlich im Stapelmagazin angebrachte Luftdüsen eingeblasen. Durch den dadurch gebildeten Luftfilm zwischen den unteren Blechen des Stapels wird das Nachströmen der Raumluft gewährleistet und das unterste Blech bei der Entnahme vom zweituntersten Blech getrennt. Das Blech wird auf einer schienenartigen Ablage 13 abgelegt und von den Saugern freigegeben. Dies ist dem Fachmann bekannt, wie auch der nachfolgende Einschub des Bleches zwischen Förderwalzen 25 mittels eines Einschubfingers 14, so dass das Blech in Richtung F transportiert wird. Das Blech gelangt dann in den Rundapparat und von dort in die Schweissvorrichtung für die Längsnaht der Behälterzarge.

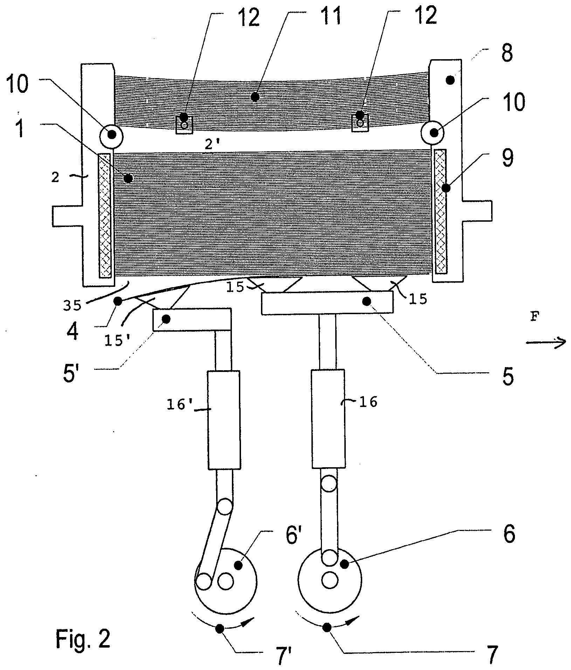

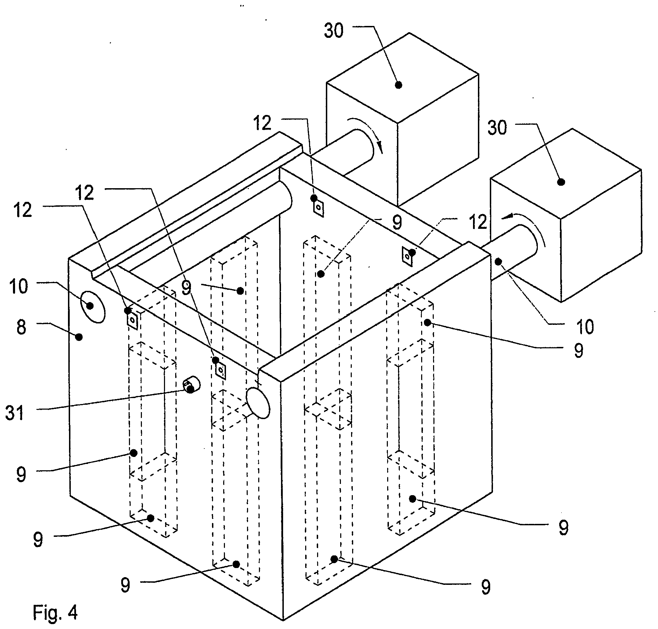

Figur 2 zeigt in ebenfalls schematischer Vertikalschnittansicht eine bevorzugte Ausführungsform der Abstapelvorrichtung gemäss der Erfindung und Figur 4 zeigt eine schaubildliche Ansicht des Stapelmagazins mit den Haltemitteln für den Stapel gemäss dieser bevorzugten Ausführung. Oberhalb der Abstapelvorrichtung ist eine nicht erfindungsgemässe Nachfüllvorrichtung 8 für die gesteuerte Stapelnachfüllung dargestellt, welche Nachfüllvorrichtung weiter unten beschrieben wird.

Bei der nachfolgenden Erläuterung der Erfindung werden die Begriffe ,unten' und ,oben' verwendet und diese sind so gemeint, wie sich das aus den Zeichnungen für den horizontal liegenden Stapel 1 ergibt, der eine Oberseite und eine Unterseite aufweist. Wird von ,hinten' gesprochen, so ist die linke Seite in den Figuren 1 und 2 gemeint, bzw. die Seite, an welcher der Einschubfinger 14 auf das abgestapelte Blech einwirkt. Entsprechend ist von 'vorne' die Rede, wenn die rechte Seite der Figuren 1 und 2 gemeint ist, bzw. die Seite auf welcher das abgestapelte Blech in die Einzugswalzen 25 eintritt.

Die bevorzugte Abstapelvorrichtung gemäss Figur 2 und Figur 4 weist ein unten offenes (Öffnung 35) Stapelmagazin 2 mit einer Aufnahme 2' zur Aufnahme eines Stapels 1 auf. Dieser ist aus einer Vielzahl von Einzelblechen gebildet, und umfasst z.B. ungefähr 200 bis 1000 Bleche. Das Stapelmagazin bildet mit seinen inneren Seitenwänden (die nur einzelne Wandteile bzw. Seitenwände mit Unterbrechungen sein können) die Begrenzung des Hohlraums bzw. der Aufnahme 2' für den Stapel. Der Grundriss der Aufnahme 2' ist der Form und Grösse der Bleche angepasst und daher quadratisch oder rechteckig. Die Grösse des Grundrisses der Aufnahme 2' ist so bemessen, dass die Aufnahme nur geringfügig grösser ist als die Grundfläche des Stapels, zum Beispiel im Bereich von wenigen Zehntelmillimetern grösser ist. Der Stapel hat somit in der Aufnahme nur ein geringfügiges Spiel. Die Bleche sind Stahlbleche, wie sie zur Behälterherstellung und insbesondere Dosenherstellung verwendet werden.

Als Haltemittel für die Bleche kommen magnetische Haltemittel 9 zum Einsatz. In einer bevorzugten Variante sind ausschliesslich magnetische Haltemittel vorgesehen, so dass auf die Auflageschienen 3 (Figur 1) nach Stand der Technik verzichtet wird und auch auf Auflagerasten verzichtet wird. Es könnte aber auch eine Kombination von magnetischen Haltemitteln mit mechanischen Auflagen vorhanden sein. In der dargestellten bevorzugten Ausführung sind nur die magnetischen Haltemittel 9 vorgesehen. Magnetische Haltemittel sind bevorzugt an allen vier Seiten der Aufnahme 2' bzw. an allen vier Seiten des Stapelmagazins 2 vorhanden, so dass der Stapel von allen Seiten durch magnetische Haltemittel gehalten wird. Dies ist in Figur 4 ersichtlich, in welcher die Haltemittel 9 mit unterbrochenen Linien dargestellt sind. Es sind vorzugsweise nur einzelne Bereiche der Seiten des Stapelmagazins 2 mit magnetischen Haltemitteln 9 versehen. Die magnetischen Haltemittel 9 erstrecken sich in der Höhe vorzugsweise über die ganze Höhe eines vollständigen Stapels, wie dies in der Figur 2 dargestellt ist. Als magnetische Haltemittel sind z.B. stabförmige Permanentmagnete vorgesehen, welche mit ihrer Längsachse vertikal ausgerichtet sind. Es sind z.B. je zwei solcher magnetischer Stäbe an jeder Seite des Stapelmagazins vorgesehen, wie in Figur 4 gezeigt. Damit wird der Stapel 1 im Stapelmagazin 2 vorzugsweise ausschliesslich durch die auf die Bleche wirkenden Magnetkräfte gehalten. Auch der Einsatz von Elektromagneten oder einer Kombination von Elektro- und Permanentmagneten ist möglich.

Wie bei der Ausführung von Figur 1 wird von unten abgestapelt bzw. das unterste Blech wird von Saugern angesaugt und auf die Ablage 13 abgelegt, die aber in Figur 2 nicht erneut dargestellt ist. Eine solche Ablage ist aber ebenfalls vorhanden. Es wird dazu sowie für die Elemente 14 und 25 auf die Erläuterung zu Figur 1 verwiesen.

Es sind verschiedene Sauger vorgesehen, die das unterste Blech nicht gleichzeitig kontaktieren und erfassen und somit das Blech nicht gleichzeitig vom Stapel lösen bzw. abziehen.

Figur 2 zeigt dazu eine Ausführung, bei welcher der im Zusammenhang mit Figur 1 erläuterte bekannte Saugkopf 5 mit mehreren Saugern 15 ein erstes Saugelement 5,15 bildet und mit seinem Antrieb 6 mit Drehsinn 7 dargestellt ist. Ein weiterer bzw. zweiter oder zusätzlicher Saugkopf mit einem oder ebenfalls mit mehreren Saugern 15' ist mit 5' bezeichnet und bildet ein zusätzliches, nicht erfindungsgemässes Saugelement 5',15' und weist einen Antrieb 6' mit Drehsinn 7' auf. Der zweite bzw. zusätzliche Saugkopf 5' wird nachfolgend als Pilotsauger bezeichnet, da er dem Saugkopf 5 voreilt und somit das unterste Blech 4 vor dem Saugkopf 5 kontaktiert und erfasst und das Blech bereits vom Stapel 1 löst bzw. teilweise abzieht, wenn der Saugkopf 5 das Blech 4 kontaktiert und erfasst, wie das in Figur 2 durch den hinteren Randbereich des Blechs 4 dargestellt ist, der bereits vom Stapel gelöst ist, während das erste Saugelement bzw. der Saugkopf 5 gerade seine oberste Stellung erreicht hat und das unterste Blech kontaktiert und mittels Unterdruck erfasst.

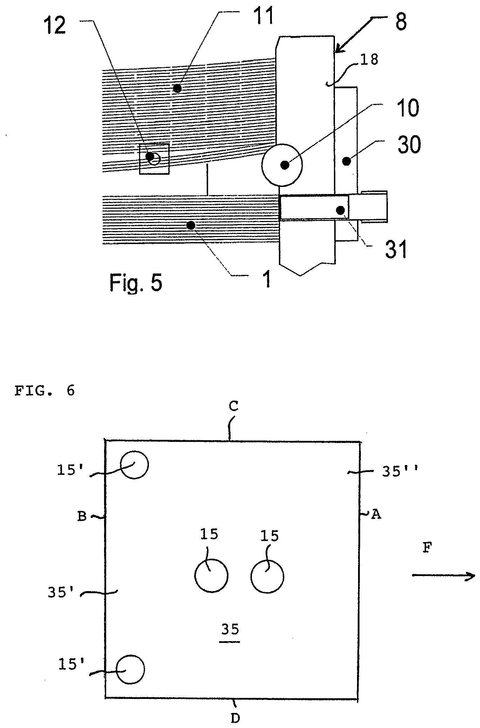

Es ist bevorzugt, dass der Pilotsauger in einem Randbereich des untersten Blechs 4 bzw. in einem Randbereich der Aufnahme 2' bzw. der unteren Öffnung 35 des Stapelmagazins wirkt. Bevorzugt wirkt der Pilotsauger auf den hinteren Randbereich des Blechs 4, bzw. der Aufnahme 2', wie dies in Figur 2 dargestellt ist. Weiter ist es bevorzugt, wenn der Pilotsauger zwei Sauger aufweist, die jeweils in einer Ecke des Blechs bzw. der Aufnahme 2' angreifen. Der Saugkopf 5' weist somit in der bevorzugten Ausführung mindestens zwei Sauger 15' auf, von denen jeder in einer Ecke hinten am Blech 4 angreift. Der Saugkopf 5 bzw. das Saugelement 5,15 kann weiterhin ungefähr mittig am Blech 4 angreifen, wie in Figur 1 dargestellt, er kann aber von der Mitte gegen vorne verschoben angeordnet sein, wie in Figur 2 dargestellt. In Figur 6 ist schematisch eine Ansicht von oben auf die Aufnahme 2' für den Stapel dargestellt, so dass der Grundriss der Öffnung 35 bzw. der Aufnahme 2' und auch des Blechstapels ersichtlich ist. Es ist für dieses Beispiel ein quadratischer Grundriss gewählt. Die Seiten der Öffnung 35 bzw. des Stapelmagazins 2 bzw. von dessen Aufnahme 2' sind mit A bis D bezeichnet und es ist dargestellt, was oben erläutert wurde. Die Sauger 15 des ersten Saugelements können auf übliche Weise angeordnet sein und erfassen somit das unterste Blech ungefähr mittig oder allenfalls etwas aussermittig. Die Sauger 15' des vorlaufenden Saugelements sind bevorzugt randseitig (Randbereiche 35' oder 35") angeordnet, in diesem Beispiel im Randbereich 35' nahe der Seite B und besonders bevorzugt in zwei Ecken der Öffnung und erfassen das unterste Blech somit an diesen Ecken.

Der weitere Saugkopf 5' ist vorlaufend angetrieben. In Figur 2 beträgt der Vorlauf ca. 90 Grad bzw. wenn der erste Saugkopf 5 an seinem oberen Umkehrpunkt angelangt ist, an welchem er das Blech 4 kontaktiert und ansaugt und damit erfasst, hat der zusätzliche Saugkopf 5' bereits einen Drehwinkel 20 des Antriebsrads 6' von 90 Grad vom oberen Umkehrpunkt ausgehend zurückgelegt. Entsprechend ist der hintere Bereich des Bleches 4 bereits vom Stapel 1 gelöst. Damit kann Umgebungsluft zwischen dem Blech 4 und dem darüber liegenden Blech des Stapels einströmen und der Saugkopf 5 bzw. das erste Saugelement kann das unterste Blech sicher abziehen. Das aktive Einblasen von Trennluft im unteren Bereich des Stapels kann dadurch entfallen. Ein Wert von ca. 90 Grad für den Vorlauf ist bevorzugt, besonders für die eingangs genannten Dünnbleche, der geschilderte Effekt tritt aber auch bei geringeren oder grösseren Werten für den Vorlauf auf. Der Pilotsauger könnte auch vorne am Blech angreifen und der Saugkopf 5 würde dann mittig oder nach hinten verschoben angeordnet sein. Der Pilotsauger 5' kann das Blech 4 loslassen, wenn der Saugkopf 5 das Blech festhält und zur Ablage 13 hin bewegt.

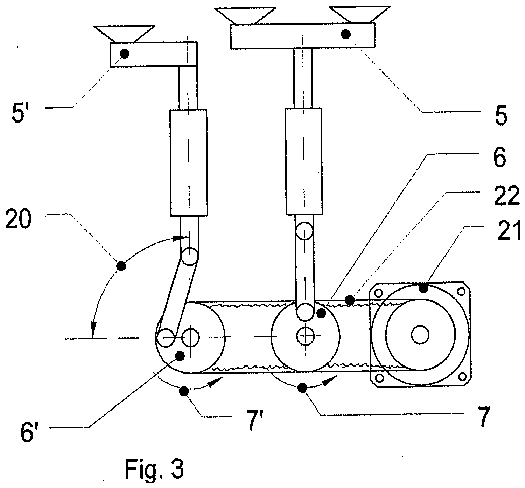

Figur 3 zeigt ein Beispiel, wie der um ca. 90 Grad drehwinkelverschobene Antrieb des zusätzlichen, nicht erfindungsgemässen Saugkopfes 5' bzw. Saugelements 5',15' ausgeführt sein kann. Ein gemeinsamer Motor 21 treibt über den Zahnriemen 22 das Antriebsrad 6 für den Saugkopf 5 und das Antriebsrad 6' für den Saugkopf 5' an. Der Motor kann ein Elektromotor (Servomotor oder Schrittmotor) oder ein anderer dem Fachmann bekannter Antriebsmotor sein.

Die Leitungen für Luft von den Saugköpfen 5, 5' bzw. den Saugelementen 5,15 und 5',15' zu den steuerbaren Ventilen 16 und 16' und von dort zu der Unterdruckquelle sowie die Steuerung des Luftdrucks zum Erfassen und Loslassen des Blechs durch die Sauger 15, 15' ist nicht gezeigt und wird nicht weiter beschrieben, da dies dem Fachmann bekannt ist.

Das Vorgehen gemäss der Erfindung erlaubt ein störungsfreies Abstapeln auch bei Dünnblechen, worunter ferromagnetische Bleche mit einer Dicke von ca. 0.14 mm bis 0.10 mm und typischerweise Bleche mit einer Dicke von 0.12 mm gemeint sind. Dies auch bei quadratischer Form solcher Bleche und grossen Formaten, worunter Formate von mehr als ca. 150 x 150 mm bis ca. 320 x 320 mm gemeint sind. Dies bei hohen Abzugskadenzen von ca. 200 Blechen pro Minute bis ca. 1200 Blechen pro Minute.

Bevorzugt ist dabei das Vorgehen mit dem Pilotsauger, der das Blech zeitlich dem Saugkopf vorgelagert an zwei Ecken vom Stapel trennt in Kombination mit der magnetischen Stapelhalterung, welche eine Blechentnahme mit voreilenden Ecken besonders gut zulässt. Weitere Vorteile der Erfindung aus der Kombination der beiden Aspekte liegen in geringerem Druckluftverbrauch durch Entfall des Einblasens von Trennluft in den Stapel und das Vermeiden von Verletzungen von der Blechkanten, da die mechanischen Auflagen für den Stapel entfallen.

Ein weiterer Aspekt der Erfindung wird an Hand der Figuren 4 und 5 erläutert. Dabei ist oberhalb eines Stapelmagazins 2 eine Nachfüllvorrichtung vorhanden, welche Bleche von einem zweiten Stapel oberhalb des Stapelmagazins in die Aufnahme des Stapelmagazins abgibt. Figur 5 zeigt eine Detailansicht, in welcher ein Stapelmagazin 2 teilweise dargestellt ist. Dies kann ein Stapelmagazin mit magnetischer Halterung des Stapels sein, wie dies vorgängig beschrieben worden ist oder ein Stapelmagazin nach Stand der Technik, z.B. gemäss Figur 1, bei welchem der Stapel mittels Auflageschienen und Auflagerasten gehalten wird. Die Nachfüllvorrichtung 8 umfasst einen Rahmen 18 oder eine rahmenähnliche Struktur in welcher der zweite Blechstapel 11 oberhalb des Stapelmagazins angeordnet ist. In Figur 4 ist dieser Rahmen als eine Verlängerung des Stapelmagazins 2 nach oben ausgeführt. Der Rahmen oder die rahmenähnliche Struktur kann aber auch ein vom Stapelmagazin separates Bauteil sein. Der zweite Blechstapel 11 liegt auf zwei einander gegenüberliegend am Rahmen gelagerten, drehbar antreibbaren Wellen 10 auf. Zur Nachfüllung des Stapels 1 im Stapelmagazin 2 mit Blechen aus dem zweiten Blechstapel 11 werden die Wellen durch ein Antriebsmittel gedreht, so dass die auf den Wellen aufliegenden Bleche des zweiten Blechstapels 11 nach unten in das Stapelmagazin 2 fallen können, solange die Drehung erfolgt. In Figur 4 sind zwei Antriebsmotoren 30 gezeigt und die Drehrichtung der Wellen ist mit Pfeilen bei den Motoren angegeben. Zur Unterstützung des Vorgangs wird während des Nachfüllvorgangs zusätzlich Druckluft in die untersten Bleche des zweiten Blechstapels 11 eingeblasen, was mit der Luftdüse 12 in Figur 5 dargestellt ist. Die Druckluft bewirkt eine Distanzierung der untersten Bleche, wodurch sich diese wölben und schneller aus den Auflagewellen gleiten. Das Nachfüllen des Stapelmagazins 2 mit Blechen aus dem zweiten Blechstapel 11 in der Nachfüllvorrichtung 8 kann zeitgesteuert erfolgen oder durch einen Zähler, der die aus dem Stapelmagazin 2 abgestapelten Bleche zählt und damit den Nachfüllbedarf erkennt. Bevorzugt ist eine Steuerung der Nachfüllvorrichtung mittels eines Füllstandssensors 31 im unteren Stapelmagazin 2, der einen tiefen Füllstand erkennen und an eine Steuerung der Abstapelvorrichtung oder der gesamten Anordnung aus Abstapler und Rundapparat und Schweissmaschine melden kann, welche Steuerung dann die Nachfüllvorrichtung aktiviert. Der Sensor 31 kann z.B. optisch arbeiten (Lichtschranke) oder elektrisch (z.B. induktiv).

## Patentansprüche

1. Abstapelvorrichtung umfassend ein unterseitig offenes Stapelmagazin (2) mit Haltemitteln für einen Stapel aus Metallblechen und eine unterhalb des Stapelmagazins angeordnete Abzugseinrichtung (5, 6) mit einem angetrieben aufwärts und abwärts bewegbaren Saugelement (5, 15), welches in seiner Umkehrlage von der Aufwärtsbewegung zur Abwärtsbewegung innerhalb der unteren Öffnung (35) des Stapelmagazins positioniert ist, zum Erfassen des jeweils untersten Blechs (4) mittels Unterdruck und Abziehen des erfassten Blechs vom Stapel, **dadurch gekennzeichnet, dass** die Haltemittel Magnete (9) umfassen, die an mindestens zwei gegenüberliegenden Seiten (A, B; C, D) des Stapelmagazins (2) angeordnet sind.

2. Abstapelvorrichtung nach Anspruch 1,
**dadurch gekennzeichnet, dass** die Haltemittel Magnete (9) umfassen, die an allen vier Seiten (A, B, C, D) des Stapelmagazins (2) angeordnet sind.

3. Abstapelvorrichtung nach Anspruch 1 oder 2, **dadurch gekennzeichnet, dass** die Haltemittel ausschliesslich mit Magneten ausgeführt sind, so dass der Stapel rein magnetisch im Stapelmagazin (2) haltbar ist.

4. Abstapelvorrichtung nach einem der Ansprüche 1 bis 3, **dadurch gekennzeichnet, dass** die Haltemittel von stabförmigen, mit ihrer Längsachse vertikal angeordneten Permanentmagnete (9) gebildet sind.

5. Verfahren zum Abstapeln einzelner Bleche (4) von der Unterseite (1') eines Blechstapels (1) durch Erfassen des jeweils untersten Blechs (4) mittels eines Unterdruck-Saugelements (5; 15), welches das erfasste Blech (4) vom Stapel abzieht und auf eine Ablage (13) ablegt, wobei der Stapel in einem unterseitig offenen Stapelmagazin (2) durch Haltemittel gehalten wird, **dadurch gekennzeichnet, dass** der Stapel von magnetischen Haltemitteln (9) im Stapelmagazin gehalten wird.

6. Verfahren nach Anspruch 5, **dadurch gekennzeichnet, dass** der Stapel (1) ausschliesslich durch magnetische Haltemittel im Stapelmagazin gehalten wird.

7. Verfahren nach Anspruch 5 oder 6, **dadurch gekennzeichnet, dass** die magnetischen Haltemittel von allen vier Seiten auf den Stapel einwirken.

8. Anordnung aus einer Abstapelvorrichtung nach einem der Ansprüche 1 bis 4 und einem Rundapparat und einer Schweissmaschine zur Herstellung von Dosenzargen.

9. Verfahren zur Herstellung von Dosenzargen, bei welchem Bleche gemäss Verfahren nach einem der Ansprüche 5 bis 7 abgestapelt, einem Rundapparat zugeführt und anschliessend in einer Rollnahtschweissmaschine längsnahtverschweisst werden.

## Claims

1. Destacking device comprising a stacking magazine (2) that is open on the bottom side and has holding means for a stack of metal sheets, and a pull-off device (5, 6) that is disposed beneath the stacking magazine and has a driven upward and downward movable suction element (5, 15), which, in the reversal position thereof from the upward movement to the downward movement, is positioned within the lower opening (35) of the stacking magazine, for gripping the respective lowest metal sheet (4) by way of negative pressure and pulling the gripped sheet from the stack, **characterized in that** the holding means comprise magnets (9), which are disposed on at least two opposing sides (A, B; C, D) of the stacking magazine (2).

2. Destacking device according to claim 1, **characterized in that** the holding means comprise magnets (9), which are disposed on all four sides (A, B, C, D) of the stacking magazine (2).

3. Destacking device according to claim 1 or 2, **characterized in that** the holding means are implemented exclusively with magnets, so that the stack can be held in the stacking magazine (2) strictly magnetically.

4. Destacking device according to any one of claims 1 to 3, **characterized in that** the holding means are formed by rod-shaped permanent magnets (9), the longitudinal axis of which is disposed vertically.

5. Method for destacking individual metal sheets (4) from the bottom side (1') of a metal sheet stack (1) by gripping the respective lowest metal sheet (4) by way of a negative pressure suction element (5; 15), which pulls the gripped metal sheet (4) from the stack and deposits the same on a placement area (13), wherein the stack is held by holding means in a stacking magazine (2) which is open on the bottom side, **characterized in that** the stack is held by magnetic holding means (9) in the stacking magazine.

6. Method according to claim 5, **characterized in that** the stack (1) is held in the stacking magazine exclusively by magnetic holding means.

7. Method according to claim 5 or 6, **characterized in that** the magnetic holding means act on the stack from all four sides of the stack.

8. Arrangement with a destacking device according to any one of claims 1 to 4 and a rounding device and a welding machine for producing can bodies.

9. Method for producing can bodies, wherein metal sheets are destacked according to the method according to any one of claims 5 to 7, fed to a rounding device, and subsequently are welded together at the longitudinal seam in a roll seam welding machine.

## Revendications

1. Dispositif de dépilage comprenant un magazine d'empilage (2) qui est ouvert du côté inférieur et qui a des moyens de retenue pour une pile de tôles métalliques, et un dispositif de retirage (5, 6) arrangé au-dessous du magazine d'empilage et ayant un élément d'aspiration (5, 15) mobile qui est entrainé en haut et en bas, qui est positionné à l'intérieur de l'ouverture inférieure (35) du magazine d'empilage dans sa position d'inversion du mouvement en haut au mouvement en bas, pour une préhension de la respective tôle métallique (4) la plus basse par une pression négative et pour tirer la tôle prise de la pile, **caractérisé en ce que** les moyens de retenue comprennent des aimants (9) disposés sur au moins deux côtés opposés (A, B; C, D) du magazine d'empilage (2).

2. Dispositif de dépilage selon la revendication 1, **caractérisé en ce que** les moyens de retenue comprennent des aimants (9) distribués sur tous les quatre côtés (A, B, C, D) du magazine d'empilage (2).

3. Dispositif de dépilage selon la revendication 1 ou 2, **caractérisé en ce que** les moyens de retenue sont implémentés uniquement avec des aimants, de sorte que la pile puisse être retenue dans le magazine d'empilage (2) strictement de manière magnétique.

4. Dispositif de dépilage selon l'une des revendications 1 à 3, **caractérisé en ce que** les moyens de retenue sont formés par des aimants permanents (9) en forme de barre, l'axe longitudinal duquels étant arrangé verticalement.

5. Procédé de dépilage des tôles métalliques (4) individuels à partir du côté inférieur (1') d'une pile de tôles métalliques (1) en agrippant la respective tôle métallique (4) la plus basse par un élément d'aspiration (5; 15) par pression négative, qui tire la tôle métallique agrippée (4) de la pile et la dépose sur une surface de placement (13), la pile étant retenue par des moyens de retenue dans un magazine d'empilage (2) qui est ouvert du côté inférieur, **caractérisé en ce que** la pile est retenue dans le magazine d'empilage par des moyens de retenue magnétiques (9).

6. Procédé selon la revendication 5, **caractérisé en ce que** la pile (1) est retenue dans le magazine d'empilage uniquement par des moyens de retenue magnétiques.

7. Procédé selon la revendication 5 ou 6, **caractérisé en ce que** les moyens de retenue magnétiques agissent sur la pile des tous les quatre côtés de la pile.

8. Arrangement avec un dispositif de dépilage selon l'une des revendications 1 à 4 et un dispositif d'arrondissage et une machine de soudage pour produire des corps de boîte.

9. Procédé pour produire des corps de boîte, des tôles métalliques étant dépilés selon le procédé selon l'une des revendications 5 à 7, alimentés à un dispositif d'arrondissage, et ensuite soudés l'une avec l'autre au lieu du joint longitudinal dans une machine de soudage à la molette.
